# EUROPEAN PATENT APPLICATION

(11) **EP 4 741 757 A1**
(43) Date of publication of application: **13.05.2026**
(21) Application number: 24211687.9
(22) Date of filing: 08.11.2024
(51) Int. Cl.: G01B 5/008, G01B 11/00, G01B 21/04

(54) **CONTROL LOOP PARAMETERIZATION FOR A CMM**

(71) Applicant: Hexagon Innovation Hub GmbH, 9435 Heerbrugg (CH)
(72) Inventor: IMHÄUSER, Kai, 88131 Lindau (DE); SUN, Rainer, 6923 Lauterach (AT); ISELI, Claudio, 9434 Au (CH)
(74) Representative: Kaminski Harmann

(57) **Abstract**

The invention pertains to a computer-implemented method (100) of setting control parameters for a CMM, the CMM comprising a probe having a sensor to determine at least one coordinate of one or more measurement points on the surface of an object, one or more actuators, and a control unit configured to control the actuators according to pre-defined control parameters to move the probe to a target position, the method comprising controlling, by the control unit, the actuators to excite (120) one or more portions of the CMM; receiving (130) a sensor feedback signal comprising sensor values captured by the sensor while the portions of the CMM are being excited, the sensor values being indicative of an acceleration of the probe; determining (140) a behaviour of the CMM based on the received sensor feedback signal; and computing (150) adapted control parameters for the control unit based on the determined behaviour.

## Description

The invention pertains to a computer-implemented method of setting control parameters for a coordinate measuring machine (CMM) based on feedback signals from a probe sensor while portions of the CMM are being excited, by oscillating or vibrating the portions at one or more known frequencies. In particular, the method comprises feedback and feedforward control loop parameterization for outer control loops where end-effector sensor data is used as feedback.

CMMs are important in various industries, e.g. in production measurement, quality control or reverse engineering. They may be utilized e.g. to determine deviations of the geometry of manufactured products from a design model, in particular to determine whether the deviations are within the manufacturing tolerance. Such measurements are typically carried out automatically or semi-automatically based on a computer generated or operator selected measuring path wherein such measuring path is provided with respect to a design model. Another application of a CMM gaining more prominence is the reverse engineering of an object. In such cases no design model exists, but an operator commands the 3D movement of the probe head by manual steering commands utilizing e.g. a jog box / joystick. Alternatively, the operator may directly steer a handheld sensor. Typically, a CMM comprises a main structure, a probing system, and a data collection and data processingsystem. The main structure usually comprises a set of actuators responsible for positioning the probing system.

One widespread example is a three-axis system, as, e.g., disclosed in DE 43 25 347. For instance, the main structure might include a basis with a measuring table and a movable frame. The workpieces might be positioned or mounted on the measuring table. The movable frame is mounted on the basis such that it can be moved along a first axis. The frame comprises an arm mounted such that it can be moved along a second axis perpendicular to the first axis. The probing system comprises the probe head and is mounted on the arm such that it can be moved along a third axis, which is perpendicular to the first and second axes. Such a construction enables the steering of the probe head in all three dimensions allowing to measure the relevant 3D coordinates of an object. Contemporary three-axis systems often further comprise components, e.g. stacked rotary tables, to provide five degrees of freedom (5DoF) regarding the pose of the probe head relative to the workpiece.

Another typical embodiment of the CMM is the so-called articulated arm coordinate measuring machine (AACMM). An AACMM comprises a stationary base and an arm comprising multiple arm segments connected by articulations. The articulations provide movability to a movable end of the arm which is opposed to the base and wherein a probe head can be attached. Due to its design principles such a system is less accurate than the above-mentioned 3- or 5-axis system, on the other hand it offers higher flexibility. For instance, EP 2 916 099 B1 discloses such an AACMM instrument.

The probing system of the CMM might be based on contact or non-contact techniques. In the first case a mechanical probe, typically realized as a stylus, achieves direct mechanical contact with the workpiece and the probe is guided through a given measuring path, while the endpoint coordinates of the probe are derived from sensor readings regarding the state of the CMM. Non-contact techniques are based on projecting a primary measuring beam on the workpiece and registering a secondary beam emanating from the object surface region. One advantage of non-contact techniques is that damage to the work object is less likely due to the lack of mechanical contact. Furthermore, non-contact methods allow a parallel acquisition of an extended area, unlike to the stylus-based methods where only the coordinates of a single point are registered.

To obtain high-quality data the CMM measurement should be performed under steady-state measurement conditions. For contact probes this might be provided e.g. by keeping the contact and/or the friction force between the stylus and the work object within a certain range. Such simple feedback methods are not available for automatically guiding a non-contact probe. This problem is particularly aggravated in the case of a manual measurement of an unknown work object, since in this case it is not even possible to provide a sufficiently good approximation path based on a digital model or previous measurement data.

EP 4 386 313 A1 discloses a method for controlling a distance between a non-contact measurement probe head of a CMM and a workpiece during a measurement. EP 3 781 901 B1 discloses dynamically adapting operation of a CMM.

For efficient automated control of a CMM, a behaviour of the system should be known, so that the control parameters can be adapted to that behaviour. Known methods for adapting the control loop parameters are mainly based on try and error and some specific non-linear compensations: Parameters are adjusted, final use-cases (scanning inspections) applied, and results analysed. In an iterative, time-consuming and manual process those parameters are optimized which cannot be applied (if needed) to an individual machine/setup.

It is therefore an object of the present invention to provide an improved method for setting control parameters for a CMM.

It is a particular object to provide such a method that runs mostly automated and does not require any additional sensors, but the ones provided within the CMM and its probe.

At least one of these objects is achieved by the appended claims.

The proposed method uses an algorithm for data-driven robust control design. Particularly, feedback and feedforward control loop parameterization for outer control loops may be applied, where end-effector sensor data is used as feedback. Suitable algorithms for data-driven robust control design approaches are generally known, e.g., disclosed in A. Karimi and C. Kammer, "A data-driven approach to robust control of multivariable systems by convex optimization", in Automatica, vol. 85, 2017.

A first aspect of the invention pertains to a computer-implemented method of setting control parameters for a coordinate measuring machine (CMM), the CMM comprising a probe having a sensor to determine at least one coordinate of one or more measurement points on the surface of an object, one or more actuators, and a control unit configured to control the actuators according to pre-defined control parameters to move the probe to a target position. The method comprises:
- controlling, by the control unit, the actuators to excite one or more portions of the CMM, wherein exciting a portion of CMM comprises oscillating or vibrating the portion at one or more known frequencies;
- receiving a sensor feedback signal comprising sensor values captured by the sensor while the one or more portions of the CMM are being excited, the sensor values being indicative of an acceleration of the probe while the one or more portions of the CMM are being excited;
- determining a behaviour of the CMM based on the received sensor feedback signal; and
- computing adapted control parameters for the control unit based on the determined behaviour.

According to some embodiments, the method further comprises controlling the actuators to move the probe to a first target position, wherein the actuators are controlled to excite the one or more portions of the CMM while the probe is at the first target position. In some embodiments, the first target position is a scanning position allowing the probe to determine at least one coordinate of the at least one measurement point.

According to some embodiments, the method comprises controlling the actuators to subsequently move the probe to a plurality of target positions, wherein the steps of controlling the actuators to excite the one or more portions of the CMM, and of receiving the sensor feedback signal are repeated at each of the plurality of target positions. In some embodiments, the plurality of target positions or a subset of the plurality of target positions are scanning positions, each scanning position allowing the probe to determine at least one coordinate of the at least one measurement point.

According to some embodiments, the method comprises controlling the actuators to move the probe along a path, particularly along a scanning path allowing the probe to determine at least one coordinate of a multitude of measurement points on the object. In some embodiments, the actuators are controlled to continuously excite the one or more portions of the CMM while the probe moves along the path. In some embodiments, the steps of controlling the actuators to excite the one or more portions of the CMM, and of receiving the sensor feedback signal are repeated at each of a plurality of positions along the path.

According to some embodiments of the method, the steps of controlling the actuators to excite the one or more portions of the CMM, and of receiving the feedback sensor values are repeated with a plurality of setups of the CMM, particularly wherein each setup deviates at least by a configuration of the probe, particularly at least a length of a stylus of the probe.

According to some embodiments of the method, the steps of controlling the actuators to excite the one or more portions of the CMM, and of receiving the feedback sensor values are repeated with a plurality of setups of the object, particularly wherein each setup deviates at least by a pose or shape of the object.

According to some embodiments, the method comprises generating a set of response models based on a multitude of sensor feedback signals, wherein at least one of determining the behaviour of the CMM and computing the adapted control parameters is also based on the set of response models, particularly wherein the response models are frequency response models or time response models.

According to some embodiments of the method, computing the adapted control parameters is also based on a set of time responses from a multitude of sensor feedback signals.

According to some embodiments of the method, the CMM is one of a multitude of same CMMs, wherein adjusting the control parameters comprises adjusting the control parameters for each of the multitude of same CMMs.

According to some embodiments of the method, the sensor is a force sensor configured to determine a force applied to the probe while the probe touches the object, and the sensor feedback signal comprises sensor values captured by the force sensor while the at least one portion of the CMM is being excited. In some embodiments, the method comprises controlling the actuators to move the probe to a scanning position, in which the probe touches a measurement point on the surface of the object, wherein the actuators are controlled to excite the one or more portions of the CMM while the probe touches the measurement point; and the sensor feedback signal comprises sensor values captured by the force sensor while the at least one portion of the CMM is being excited. In other embodiments, the probe does not touch an object while the at least one portion of the CMM is being excited.

According to some embodiments of the method,
- the sensor is a distance sensor configured to determine a distance between the scan probe and a surface of the object;
- the method comprises controlling the actuators to move the probe to a scanning position, the scanning position allowing the distance sensor to determine a distance between the scan probe and one or more measurement points on the surface of the object;
- the actuators are controlled to excite the one or more portions of the CMM while the distance sensor continuously determines the distance the between the scan probe and the one or more measurement points; and
- the sensor feedback signal comprises sensor values captured by the distance sensor while the at least one portion of the CMM is being excited.

According to some embodiments of the method, exciting the one or more portions of the CMM comprises applying a signal with broadband characteristics, e.g. at least one of sine sweep, multisine, pseudorandom binary sequence, random noise, and random burst. According to other embodiments of the method, exciting the one or more portions of the CMM comprises applying one of pseudo-random noise and sinusoidal oscillations along a plurality of frequencies.

According to some embodiments of the method, the CMM comprises one or more encoders configured to provide encoder signals indicating a nominal position of the probe, wherein the method further comprises receiving encoder signals from the one or more encoders while the at least one portion of the CMM is being excited, and determining the behaviour of the CMM is also based on the received encoder signals.

According to some embodiments of the method, determining the behaviour comprises computing frequency-domain data from time-domain data, and/or using time-domain data and deducing model time-domain data.

According to some embodiments of the method, the behaviour of the coordinate measuring machine comprises delays in a communication between the control unit the actuators or the sensor, an elasticity of the actuators, and/or a distortion or bending of a machine frame or structure of the coordinate measuring machine, e.g. between an encoder and the probe.

According to some embodiments of the method, the control parameters comprise feedback and feedforward control loop parameters, and computing the adapted control parameters comprises generating optimized feedback and feedforward control loop parameters.

According to some embodiments of the method, the steps of determining the behaviour and of computing the adapted control parameters are performed by the control unit, particularly in real time.

According to some embodiments of the method, the sensor values are acquired by the control unit and provided to an external computing unit, particularly together with information about constraints and/or a setup of the coordinate measuring machine, and the steps of determining the behaviour and of computing the adapted control parameters are performed by the external computing unit.

According to some embodiments of the method, the CMM has a closed-loop scanning mode for measuring unknown objects, wherein computing the adapted control parameters comprises computing adapted control parameters for the closed-loop scanning mode.

According to some embodiments of the method, the CMM has an observer-based open-loop scanning mode for measuring known objects, wherein computing the adapted control parameters comprises computing adapted control parameters for the open-loop scanning mode.

According to some embodiments of the method, determining the behaviour of the CMM comprises determining whether the sensor values are indicative of a deviation of the behaviour from a desired behaviour, and the adapted control parameters are computed only if the feedback sensor values are indicative of a deviation of the behaviour, particularly wherein determining whether the sensor values are indicative of a deviation of the behaviour comprises determining whether the received sensor values deviate from expected sensor values.

A second aspect of the invention pertains to a CMM comprising a probe having a sensor to determine at least one coordinate of one or more measurement points on the surface of an object, one or more actuators, and a control unit configured to control the actuators according to pre-defined control parameters to move the probe to a target position, wherein the CMM, particularly the control unit, is configured to perform the method according to the first aspect of the invention.

A third aspect of the invention pertains to a computer program product comprising program code having computer-executable instructions for performing the method according to the first aspect, particularly when executed on a control unit of the CMM according to the second aspect of the invention.

The invention in the following will be described in detail by referring to exemplary embodiments that are accompanied by figures, in which:
- Fig. 1: shows a first exemplary embodiment of a CMM, the probe being a touchless probe having a distance sensor;
- Fig. 2: shows a second exemplary embodiment of a CMM, the probe being a touch probe having a force sensor;
- Fig. 3: illustrates an exemplary embodiment of a method according to the invention;
- Fig. 4: illustrates an exemplary outer control loop structure;
- Fig. 5: shows an example of an excitation and the resulting deflection of a tactile scanning probe;
- Fig. 6: shows a Bode diagram illustrating the computation of frequency-domain data out of time-domain data;
- Fig. 7: shows a Bode diagram illustrating how a large set of frequency-response models results from a multitude of sensor feedback signals;
- Fig. 8: shows a Bode diagram illustrating the tuning of outer-loop control parameters;
- Fig. 9: illustrates closed-loop scanning with tuning elements; and
- Fig. 10: illustrates a system view on closed-loop scanning.

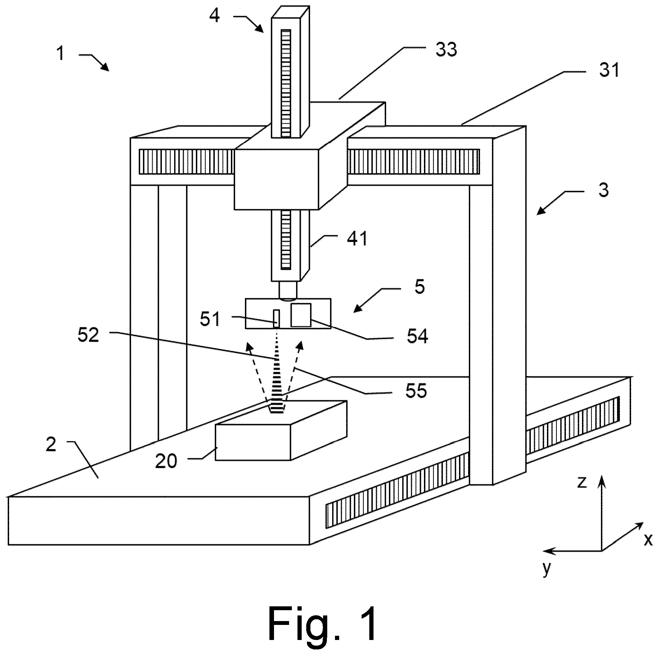

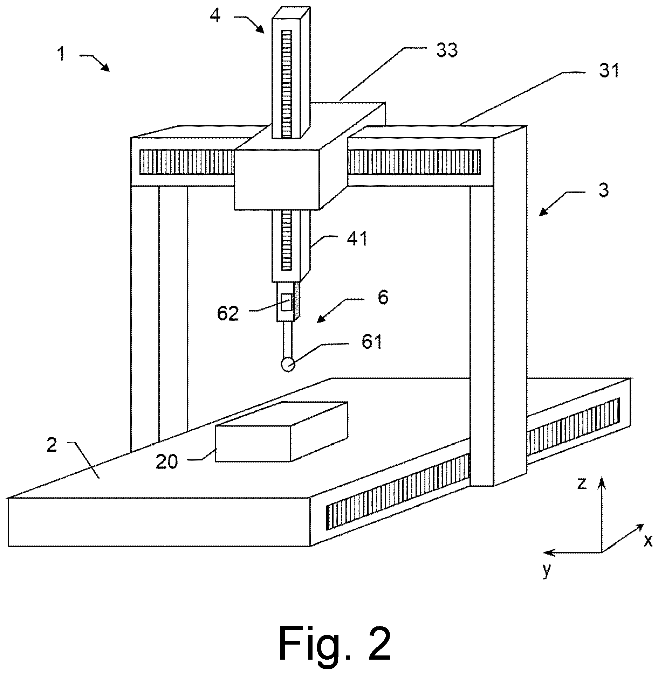

Figures 1 and 2 show two exemplary embodiments of a coordinate measuring machine (CMM) 1 according to the invention. In both examples, the shown CMM 1 is a classical bridge type CMM that is equipped with a probe head 5, 6 as tool or end-effector.

The CMM 1 comprises a measuring table 2 to support an object to be measured (workpiece 20). While not shown, the measuring table 2 might comprise elements aiding the positioning of the workpiece 20. The measuring table 2 might also comprise further elements to clamp or otherwise fix, in particular by a vacuum chuck, the workpiece 20. Such further elements might be temporarily mounted to the measuring table 2. A movable frame 3 is mounted on the measuring table 2 such that it can be moved along a first axis, the x-axis in the shown example, by a first set of motors. The frame 3 comprises an arm 31. The mounting of the probing system 33 is mounted on the arm 31 such that it can be moved along a second axis perpendicular to the first axis, the y-axis in the shown example, by a second set of motors. The probe head 5, 6 is mounted on a second arm 41 such that it can be moved along a third axis, which is perpendicular to the first and second axes, the z-axis in the shown example, by a third set of motors.

In Figure 1, the probe head is a touchless scanning probe 5. During operation, this scanning probe 5 approaches a workpiece 20 and can determine relative positions between one or more points on the workpiece and the end-effector using one or more distance sensors. These measured relative positions, the probe's position along the active joints of the CMM 1 and - optionally some compensation of deformation of the system - can be used to determine precise 3D coordinates for the measurement points on the surface of the workpiece 20. The scanning probe 5 comprises an emitter unit 51 configured to emit a primary measuring beam 52 towards workpiece 20. The primary measuring beam 52 might be a laser beam. The primary measuring beam 52 provides a primary measuring beam pattern on the workpiece 20. The workpiece 20 interacts with the primary measuring beam 52 to generate a secondary measuring beam 55, e.g., by means of diffuse reflection, such that a secondary measuring beam pattern provides information representing a surface of the workpiece. The scanning probe 5 further comprises a receiver unit 54 configured to acquire the secondary measuring beam pattern. The receiver unit might be a pixel detector.

The scanning probe head 5 continuously determines a distance to the workpiece 20, for instance, by triangulation or time-of-flight (ToF) measurement of the primary and secondary measuring beam 51, 52. Instead of the scanning probe head 5 shown here, any probe head comprising a distance sensor may be used as well. The distance may be measured using a single laser beam, a laser fan, ultrasound or other know means.

In Figure 2, the probe head is a a touch probe 6. The touch probe 6 comprises a stylus with a tip 61. During operation, this touch probe 6 approaches the workpiece 20 so that the tip 61 contacts measurement points on the surface of the workpiece 20. The probe's position along the active joints of the CMM 1 and - optionally some compensation of deformation of the system - can be used to determine precise 3D coordinates for the measurement points on the surface of the workpiece 20. The touch probe 6 comprises a force sensor 62 configured to determine a force applied to the touch probe while its tip 61 touches the workpiece 20. The force detected by the force sensor can be transformed into a deformation. Such a force sensor 62 also may be included in other kinds of probes, e.g., as a security measure.

The distance or force detected by the respective sensor in the probe head is provided to a control unit of the CMM 1 and can be used to adjust movements of the active joints by correcting the trajectories of those active joints.

To scan the workpiece, the tool 5, 6, while moving around the workpiece 20, is either in contact with the workpiece or a relative distance between workpiece and tool is constantly measured. The force or distance information provided by the force or distance sensor of the tool can be interpreted and used to adjust the movement of the axes to keep the tool in the measuring range and enable at the same time highspeed inspection/machining.

Classical CMMs often comprise two measuring modes:
a) "Observer-Scanning-Mode" (also called: "Open-Loop Scanning"), and
b) "Scanning-of-unknown paths" (also called: "Closed-Loop Scanning").

The "Observer-Scanning-Mode" is used for inspecting a workpiece that is known *a priori.* CAD data are available, and paths are generated and transmitted to the CMM-controller. It is now the task of the "Observer" to keep the tool/sensor/scanning probe within measuring range and adjust the paths or trajectories during the scanning process. For the "Scanning-of-unknown-paths" no other information of the workpiece is available than a starting point, direction, stop conditions (e.g., intersection with a certain plane) and boundary conditions (e.g., keep travelling path between two parallel planes). The force or relative displacement information between tool and workpiece is used to estimate the next trajectory-steps.

Both modes require feedback and feedforward loops together with some decomposition of signals along the normal of the workpiece surface and travelling direction (orthogonal) and some transformations in machine coordinate to command movements (adjustments) for the machine position along the active joints.

Those feedback and feedforward loops need to be parametrized accordingly and for this the system needs to be analysed and certain parameters with certain methods to be deduced. This is called "loop tuning". It is known to parametrize those loops with classical PID-control theories plus some filtering (low-pass, band-pass etc.) (mainly integrator portion) and adjust them manually by means of trial-and-error and based on experiments to get the required performance. Additionally, some low-pass filtering is applied plus some additional non-linear components (gain adjustments based on acceleration inputs). Shift-correction may be added, which uses all information from the past to estimate a nominal offset using least square approach or similar optimization method of the feature to be scanned. Classical approaches need lots of try and errors and lack generality - it means depending on use case of user configuration has to be changed.

Additionally, the option of modelling the control system, e.g. using physical modelling as further extension to above description can be implemented as well. Based on this model control synthesis can be performed.

The proposed approach for control-loop parameterization comprises identifying the system (the complete CMM 1 including the end effector 5, 6) quasi-automatically by exciting the CMM 1 or portions thereof with dedicated frequency signals at various positions in space of the machine and various system configurations (e.g., wrist orientation or stylus-length), while the system is in and off measuring range (e.g. touching or non-touching if a touch probe is used). Data is acquired and later pre-processed, analysed and handed over to an optimizer together with constraints. This is comparable to the above-mentioned algorithm by Karimi and Kammer. The generated output comprises optimized feedback and feedforward control loop parameters which can be applied within the system and related signal decomposition and composition steps to manage the "outer loops" as mentioned above. Data can be extended with all possible variations of tool configuration (styli, sizes, orientations, etc.) and added as input to the optimizer. Aa a result, robust quasi-automatic tuned outer loops are generated which can be adapted and extended in a flexible way for further needs.

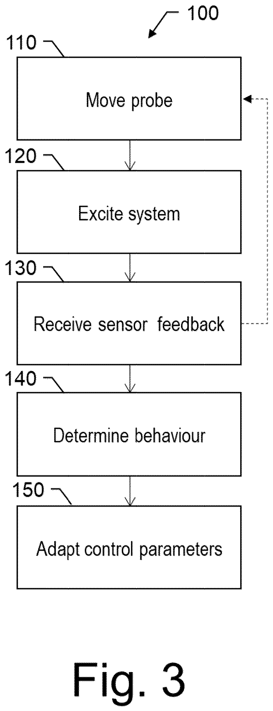

Figure 3 is a flow chart illustrating an exemplary embodiment of a method 100 of generating control parameters according to the invention. The method 100 is performed using a coordinate measuring machine (CMM), for instance the CMM of Figure 1 or the CMM of Figure 2. It comprises a probe with a sensor to determine at least one coordinate of one or more measurement points on the surface of an object, one or more actuators, and a control unit configured to control the actuators according to pre-defined control parameters to move the probe to a target position. The object of the method is to generate new or adapted control parameters for the control unit. This may be done after the production of the CMM or in fixed intervals during the lifetime of the CMM.

The method 100 starts with moving the probe of the CMM to a position within a working volume of the CMM. This involves controlling the actuators to move the probe.

Then, the CMM, or, more precisely, one or more portions of the CMM, are excited 120, which means that the respective portion is being oscillated or vibrated at one or more known frequencies. For instance, exciting 120 the one or more portions may comprise applying, along a plurality of frequencies, pseudo-random noise or sinusoidal oscillations. Also, a signal with broadband characteristics, such as sine sweep, multisine, pseudorandom binary sequence, random noise, or random burst, may be applied to excite 120 a portion of the CMM. Various portions of the CMM might be excited, including the probe as well as portions far away from the probe.

Then, e.g., while the CMM is still being excited or shortly thereafter, a sensor feedback signal is received 130. This signal comprises sensor values captured by the sensor at the probe that are indicative of accelerations or deflections of the probe during the exciting of the at least one portion of the CMM.

Based on the received sensor feedback signal, a behaviour of the CMM, or at least some parts of the CMM - depending on which parts of the CMM have been excited - can be determined 140. Particularly, this involves comparing the excitation and the indicated accelerations or deflections of the probe resulting from the excitation.

The received sensor feedback signal may comprise time-domain data, wherein, in order to determine 140 the behaviour frequency-domain data may be computed from the time-domain data, or model time-domain data may be deduced based on the time-domain data. Optionally, if the CMM comprises one or more encoders configured to provide encoder signals indicating a nominal position of the probe, these encoder signals may also be used for determining 140 the behaviour.

The determined behaviour of the CMM may comprise things like delays in a communication between the control unit and the actuators or the sensor, an elasticity of the actuators, a bending of a machine frame or structure, or any combination thereof.

Based on the determined behaviour, finally, adapted control parameters for the control unit are computed 150. Using the adapted control parameters, the control unit may then overcome any unwanted behaviour of certain parts of the CMM. For instance, the computed control parameters can be adapted to provide the best measurement results for the CMM in view of its behaviour.

Optionally, if the CMM is one of a multitude of same machines, adjusting the control parameters comprises adjusting the control parameters for each of the multitude of same coordinate measuring machines. For instance, after having produced ten CMM having the same characteristics, it may be sufficient to perform the method with one of the machines and to transfer the results, i.e. the adapted control parameters, to each of the other CMMs.

In preferred embodiments, a multitude of sensor feedback signals are received 130, and the behaviour is determined 140 based on the multitude of sensor feedback signals. For instance, the probe may be moved 110 subsequently to a plurality of positions, wherein the steps of exciting 120 the one or more portions of the CMM, and of receiving 130 the sensor feedback signal are repeated for each of the plurality of positions. Similarly, the probe may be moved 110 along a path, wherein the one or more portions of the CMM are excited 120 at a plurality of positions along the path or continuously while the probe travels along the path. Alternatively or additionally, the steps may be repeated with different setups of the CMM. For instance, different configurations of the probe may be used, such as different lengths of a probe's stylus.

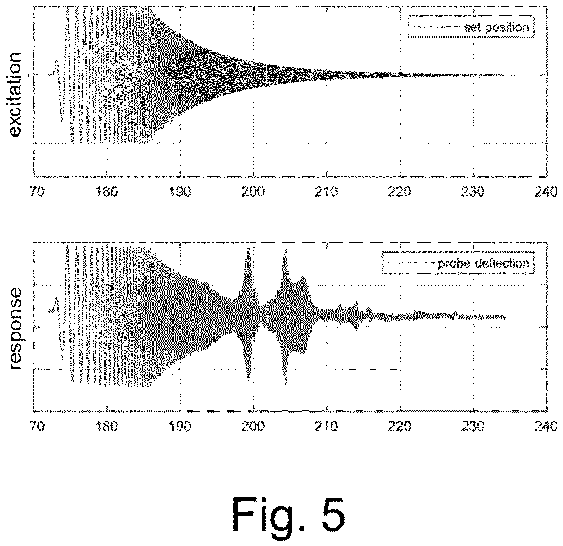

If a multitude of sensor feedback signals is available, then a set of response models can be generated based on the sensor feedback signals, for instance a set of frequency response models or a set of time response models. Figure 5 shows the computation of frequency-domain data out of time-domain data. Determining 140 the behaviour of the CMM and/or computing 150 the adapted control parameters may then be based also on the generated set of response models. Alternatively, computing 150 the adapted control parameters may be based directly on a set of time responses from the multitude of sensor feedback signals.

If the probe is a touchless scan probe, such as the one of the CMM of Figure 1, the sensor is a distance sensor configured to determine a distance between the scan probe and a surface of an object. In that case the actuators move 110 the probe to a scanning position, at which the distance sensor can determine a distance between the scan probe and one or more measurement points on the surface of the object. The sensor feedback signal then comprises sensor values captured by the distance sensor while the at least one portion of the CMM is being excited.

If the probe is a touch probe, such as the one of the CMM of Figure 2, the sensor is a force sensor configured to determine a force applied to the probe while the probe touches the object. In that case the sensor feedback signal comprises sensor values captured by the force sensor while the at least one portion of the CMM is being excited. However, the touch probe does not need to touch an object to provide sensor values, i.e. it does not need to be moved 110 to a scanning position. This is because the force sensor measures a deflection of the probe and thus can be seen as a simple accelerometer with a low bandwidth.

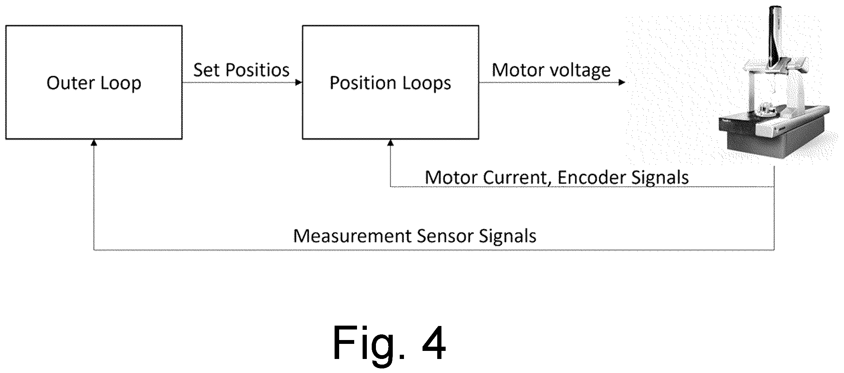

Figure 4 shows a schematic block diagram illustrating an exemplary Outer Control Loop structure as part of an exemplary method according to the invention. This can be applied to observer-based scanning and to scanning of unknown parts.

Open-loop scanning with observer is the scanning of parts with pre-defined paths together with corrections depending on deflections of the sensor or tool or end-effector to keep sensor in measuring range. Closed-loop scanning is the scanning of unknown parts without a given predefined path.

Using a data-driven workflow with a mounted tool with probe and excitation of CMM with probe and sensor data (related force-feedback or relative displacement between tool and workpiece) together with control-loop constraints (e.g., input-noise-sensitivity) a robust and optimized high-order feedback and feedforward linear "outer control loop" can be deduced for observer-based open-loop scanning as well as for scanning of unknown paths (closed-loop scanning).

The outer loop is basically computing set positions (or set position corrections in case of observer) based on measurement sensor signals - e.g., from a tactile analogue scanning probe or from a laser sensor. The tuning of the outer loops based on the outer loops system is the described in the following.

A data-driven loop-tuning approach is aimed extended such to include data (relative displacement between tool and workpiece or force between tool and workpiece) from the tool and the whole system (CMM). Therefore, data need to be acquired covering the system behaviour, including boundary cases like styli of different lengths, various wrist orientations, etc.). This system behaviour is given by the combination of many subsystems, including:
- hardware: controller, servo drives, sensor signal processing, communication topology (sample rates, delays);
- loops: position, velocity and current loops for every axis;
- measurement sensor: providing deflection or distance to measurement surface or forces applied between workpiece and tool; and
- machine frame: bending of structure, elasticity of drive chain, motors, position/speed transducers.

To acquire the relevant data, the system input is excited and the response from tool to active joints (machine axes) is measured (measurement sensor signal, like tactile scanning probe or laser scanner etc.). To obtain the most reasonable data, this data acquisition can be performed with different setups, and the resulting data can be combined as input for tuning.

For instance, with the example of a tactile scanning probe as end-effector of the CMM, the setups (input data-sets) may include:
- excitation with surface contact in different orientations, e.g. when contacting the surface of a spherical object, excitation in surface normal direction usually comprises 13 different directions,
- excitation without surface contact;
- excitation with varying a wrist orientation (e.g., A0B0, A45B-45, A90B0 and A90B-180);
- excitation with varying stylus length (e.g., using standard (5x50) and maximum length (e.g., 100mm or 225mm depending on machine size); and
- excitation with various positions of the probe in a working volume of the CMM.

Combining data of different kind of setups results in covering the general machine behaviour and is suitable for proper outer-loop tuning and act as input data-sets (raw).

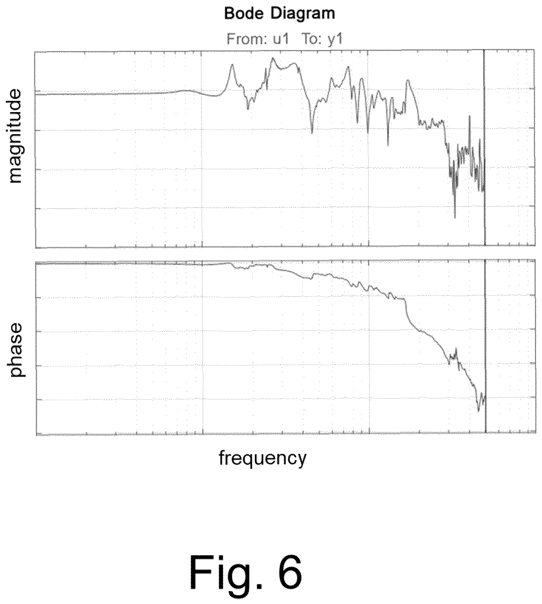

Figure 5 shows an example of an excitation (set position) and the resulting deflection of a tactile scanning probe. By comparing the excitation and the resulting deflection, a behaviour of the CMM may be determined. Figure 6 shows a Bode diagram illustrating that from this time-domain data the frequency-domain data can be computed.

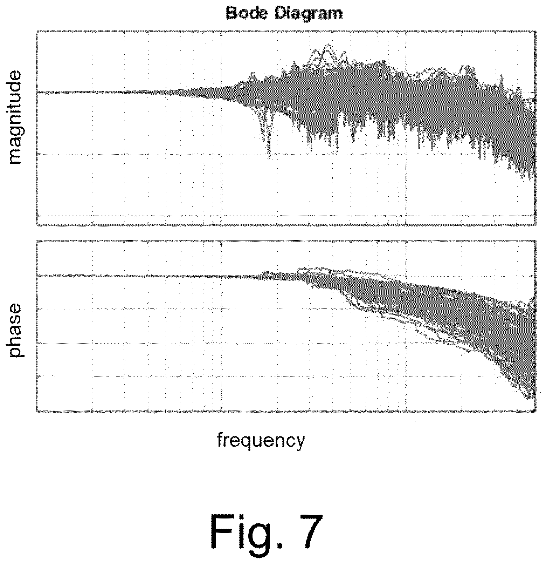

Putting data of all different setups together, one gets a large set of frequency response models as illustrated in Figure 7. Figure 7 shows a Bode diagram illustrating how a large set of frequency-response models results from a multitude of sensor feedback signals. Together with constraints, this pre-processed data may be used as input for adapting outer-loop control parameters.

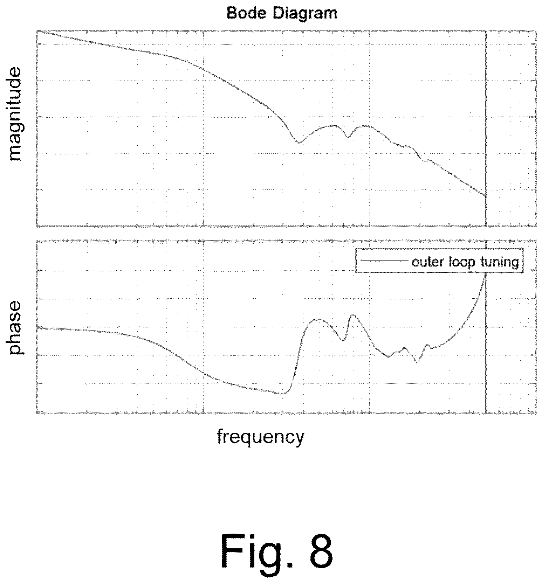

Using the above-described data-driven algorithm with the acquired frequency response models and adequate tuning configuration (constraints settings), suitable loop tuning can be computed. An example of an outer loop using the algorithm as described above is illustrated in Figure 8. Figure 8 shows a Bode diagram illustrates the tuning of outer-loop control parameters. With the acquired frequency response models and adequate tuning configuration suitable loop tuning can be computed.

For the observer-based open-loop scanning this tuning can be used directly (computing the set position corrections based on deflection error). For the closed-loop scanning the tuned outer loop needs to be decomposed into gain, setpoint filter, and integrator parts for tuning. A tip-velocity estimation filter is crucial for friction compensation, involving computation and estimation steps. Using tip centre for tip velocity estimation in closed-loop scanning significantly improves results over tip contact. Transitioning to tip centre in the full algorithm enhances control direction and position deviation compared to tip contact.

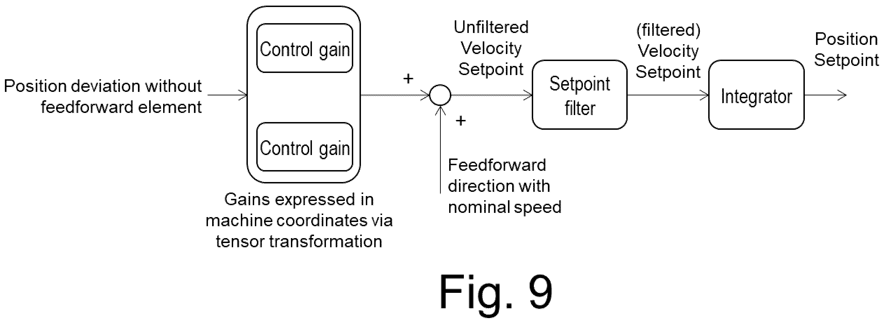

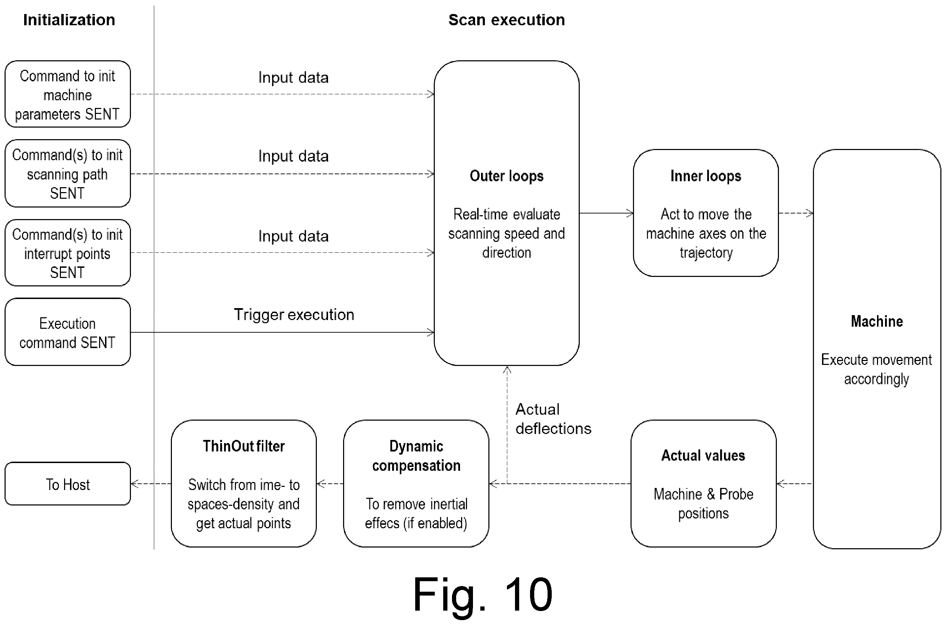

Figure 9 shows a diagram that depicts briefly in a high level the part of closed-loop scanning with tuning elements (except for tip velocity filter). Figure 10 illustrates a system view on closed-loop scanning.

Optionally, a combination with a linear parameter varying gain-scheduling method is possible. This allows to get pointwise optimized robust controllers with certain system configuration and state (e.g. position of machine, tool and tool-configuration) and transition from one system configuration and state towards another system configuration and state.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) of setting control parameters for a coordinate measuring machine (1), the coordinate measuring machine comprising
- a probe having a sensor to determine at least one coordinate of one or more measurement points on the surface of an object,
- one or more actuators, and
- a control unit configured to control the actuators according to pre-defined control parameters to move the probe to a target position,
the method (100) comprising:
- controlling, by the control unit, the actuators to excite (120) one or more portions of the coordinate measuring machine (1), wherein exciting a portion of the coordinate measuring machine (1) comprises oscillating or vibrating the portion at one or more known frequencies;
- receiving (130) a sensor feedback signal comprising sensor values captured by the sensor while the one or more portions of the coordinate measuring machine (1) are being excited, the sensor values being indicative of an acceleration of the probe while the one or more portions of the coordinate measuring machine (1) are being excited;
- determining (140) a behaviour of the coordinate measuring machine (1) based on the received sensor feedback signal; and
- computing (150) adapted control parameters for the control unit based on the determined behaviour.

2. Method (100) according to claim 1, comprising controlling the actuators
- to move (110) the probe to a first target position, wherein the actuators are controlled to excite (120) the one or more portions of the coordinate measuring machine (1) while the probe is at the first target position, particularly wherein the first target position is a scanning position, the scanning position allowing the probe to determine at least one coordinate of the at least one measurement point; and/or
- to subsequently move (110) the probe to a plurality of target positions, wherein the steps of controlling the actuators to excite (120) the one or more portions of the coordinate measuring machine (1), and of receiving (130) the sensor feedback signal are repeated at each of the plurality of target positions, particularly wherein the plurality of target positions or a subset of the plurality of target positions are scanning positions, each scanning position allowing the probe to determine at least one coordinate of the at least one measurement point.

3. Method (100) according to claim 1 or claim 2, comprising controlling the actuators to move (110) the probe along a path, wherein
- the actuators are controlled to continuously excite (120) the one or more portions of the coordinate measuring machine (1) while the probe moves along the path; and/or
- the steps of controlling the actuators to excite (120) the one or more portions of the coordinate measuring machine (1), and of receiving (130) the sensor feedback signal are repeated at each of a plurality of positions along the path,
particularly wherein the path is a scanning path, the scanning path allowing the probe to determine at least one coordinate of a multitude of measurement points on the object.

4. Method (100) according to any one of the preceding claims, wherein the steps of controlling the actuators to excite (120) the one or more portions of the coordinate measuring machine (1), and of receiving (130) the feedback sensor values are repeated
- with a plurality of setups of the coordinate measuring machine (1), particularly wherein each setup deviates at least by a configuration of the probe, particularly at least a length of a stylus of the probe; and/or
- with a plurality of setups of the object, particularly wherein each setup deviates at least by a pose or shape of the object.

5. Method (100) according to claim 3 or claim 4, further comprising generating a set of response models based on a multitude of sensor feedback signals, wherein at least one of determining (140) the behaviour of the coordinate measuring machine (1) and computing (150) the adapted control parameters is also based on the set of response models, particularly wherein the response models are frequency response models or time response models.

6. Method (100) according to any one of the preceding claims, wherein the coordinate measuring machine (1) is one of a multitude of same coordinate measuring machines, wherein adjusting the control parameters comprises adjusting the control parameters for each of the multitude of same coordinate measuring machines.

7. Method (100) according to any one of the preceding claims, wherein
- the sensor is a force sensor configured to determine a force applied to the probe while the probe touches the object; and
- the sensor feedback signal comprises sensor values captured by the force sensor while the at least one portion of the coordinate measuring machine (1) is being excited,
particularly wherein the method comprises controlling the actuators to move (110) the probe to a scanning position, in which the probe touches a measurement point on the surface of the object, wherein
- the actuators are controlled to excite (120) the one or more portions of the coordinate measuring machine (1) while the probe touches the measurement point; and
- the sensor feedback signal comprises sensor values captured by the force sensor while the at least one portion of the coordinate measuring machine (1) is being excited.

8. Method (100) according to claim 7, wherein the probe does not touch an object while the at least one portion of the coordinate measuring machine (1) is being excited.

9. Method (100) according to any one of claims 1 to 6, wherein
- the sensor is a distance sensor configured to determine a distance between the scan probe and a surface of the object;
- the method comprises controlling the actuators to move (110) the probe to a scanning position, the scanning position allowing the distance sensor to determine a distance between the scan probe and one or more measurement points on the surface of the object;
- the actuators are controlled to excite (120) the one or more portions of the coordinate measuring machine (1) while the distance sensor continuously determines the distance the between the scan probe and the one or more measurement points; and
- the sensor feedback signal comprises sensor values captured by the distance sensor while the at least one portion of the coordinate measuring machine (1) is being excited.

10. Method (100) according to any one of the preceding claims, wherein the coordinate measuring machine comprises one or more encoders configured to provide encoder signals indicating a nominal position of the probe, wherein
- the method further comprises receiving encoder signals from the one or more encoders while the at least one portion of the coordinate measuring machine (1) is being excited; and
- determining (140) the behaviour of the coordinate measuring machine (1) is also based on the received encoder signals.

11. Method (100) according to any one of the preceding claims, wherein the control parameters comprise feedback and feedforward control loop parameters, and computing (150) the adapted control parameters comprises generating optimized feedback and feedforward control loop parameters.

12. Method (100) according to any one of the preceding claims, wherein
- the steps of determining (140) the behaviour and of computing (150) the adapted control parameters are performed by the control unit, particularly in real time; or
- the sensor values are acquired by the control unit and provided to an external computing unit, particularly together with information about constraints and/or a setup of the coordinate measuring machine, and the steps of determining (140) the behaviour and of computing (150) the adapted control parameters are performed by the external computing unit.

13. Method (100) according to any one of the preceding claims, wherein the coordinate measuring machine (1)
- has a closed-loop scanning mode for measuring unknown objects, wherein computing (150) the adapted control parameters comprises computing (150) adapted control parameters for the closed-loop scanning mode; and/or
- has an observer-based open-loop scanning mode for measuring known objects, wherein computing (150) the adapted control parameters comprises computing (150) adapted control parameters for the open-loop scanning mode.

14. Coordinate measuring machine (1) comprising
- a probe having a sensor to determine at least one coordinate of one or more measurement points on the surface of an object,
- one or more actuators, and
- a control unit configured to control the actuators according to pre-defined control parameters to move the probe to a target position,
**characterized in that**
the coordinate measuring machine (1), particularly the control unit, is configured to perform the method (100) according to any one of the preceding claims.

15. Computer program product comprising program code having computer-executable instructions for performing the method (100) according to any one of claims 1 to 13, particularly when executed on a control unit of the coordinate measuring machine (1) according to claim 14.
